# EUROPEAN PATENT APPLICATION

(11) **EP 1 871 084 A1**
(43) Date of publication of application: **26.12.2007**
(21) Application number: 07110878.1
(22) Date of filing: 22.06.2007
(51) Int. Cl.: H04M 15/00, H04L 12/14, H04L 12/46

(54) **Method and system for third party charging**

(30) Priority: 23.06.2006 CN 200610090411
(71) Applicant: Huawei Technologies Co., Ltd., Longgang District Shenzhen Guangdong 518129 (CN)
(72) Inventor: Shan, Mingjun c/o Huawei Technologies Co., Ltd., Shenzhen, Guangdong 518129 (CN)
(74) Representative: Körber, Martin Hans

(57) **Abstract**

In a method for third party charging, a paying party sets its payment limit, verifying code, etc., and shares related information with a service requesting party; when accessing the service, the service requesting party inputs the related information, such as a third party charging access identifier, a paying party identifier, the verifying code, etc. A service application server determines whether the service is charged from a third party account; if yes, the service application server collects the third party charging information, such as the MSISDN of the paying party, the account information or the verifying code information, and sends the information to the charging system through a charging interface protocol; the charging system charges for the service from the third party account according to the information received. Another method for third party charging and a system for third party charging are also provided. Thus, flexible third party charging is achieved.

## Description

### Field of the Invention

The present invention relates to communication systems, and more particularly, to a method and system for third party charging.

### Background of the Invention

Currently when some telecommunication services are used, a user usually have a corresponding account for charging the use of the telecommunication services in a charging system. While a telecommunication service is being used, the charging system charges the user for the expense of using the service on the user's account. However, with the increasing demands for third party charging when a telecommunication service is used, th e traditional monotony charging method for charging the using party may not satisfy user requirements.

Currently the third party charging service is mainly implemented as Virtual Private Network (VPN) service. For example, in one VPN service, a VPN user list is setup, which includes a mount of VPN users and corresponds to a VPN account. When a user accesses the VPN service, a Charging Trigger Function (CTF) and the charging system interact with each other to debit an expense from the VPN account if the user is a VPN user in the VPN user list; the expense will be charged to the user's account if the user is not a VPN user.

In the VPN service, third party charging is performed through the establishment of the VPN user list and the VPN account, there is no choices of charging accounts, i.e., charging only from the VPN account when the user is the VPN user in the VPN user list, and the third party charging can't be performed in flexible way. The user can not choose an account at random when using one service. Furthermore, debiting from different accounts according to different consuming periods or different services can not be supported.

### Summary of the Invention

Some embodiments of the present invention provide a method for third party charging and a system for third party charging to implement the third party charging in a flexible way.

According to an embodiment of the present invention, a method for third party charging includes: sending, by a service requesting party, a service request message including a paying party identifier to a Charging Trigger Function (CTF) when the service requesting party accesses a service; sending, by the CTF, third party charging information including the paying party identifier from the service request message to a charging system in response to determining that the service is charged from a third party account; and charging, by the charging system, for the service from a paying party account corresponding to the paying party identifier according to the third party charging information.

According to another embodiment of the present invention, a method for third party charging includes: collecting, by a Charging Trigger Function (CTF), a paying party identifier from a third party charging condition in response to determining that a service requested by a service requesting party should be charged from a third party account according to the third party charging condition after the service requesting party accesses the service; sending the paying party identifier to a charging system; and charging, by the charging system, for the service from a paying party account according to the paying party identifier sent by the CTF.

Preferably, the process of charging for the service from the paying party account includes: reserving an expense of the service and debiting the expense from the paying party account when the service is terminated. Or the process of charging for the service from the paying party account includes: debiting an expense of the service from the paying party account when the service is terminated.

According to another embodiment of the present invention, a system for third party charging includes a client, for accessing a service to the CTF; a Charging Trigger Function (CTF), for collecting third party charging information including a paying party identifier, sending the third party charging information; and a charging system, for charging for the service from a paying party account according to the third party charging information sent by the CTF.

A Charging Trigger Function (CTF) is also provided, including one or more components for collecting a paying party identifier in response to determining that a service requested by a service requesting party should be charged from a third party account, and sending the paying party identifier.

As can be seen from the technical solution, the CTF sends the third party charging information including the paying party identifier to the charging system in response to determining that the service requested by the service requesting party is a third party charging service according to the service request message including the paying party identifier received from the service requesting party, or determining that the service requested by the service requesting party is a third party charging service according to the third party charging condition set in the CTF. The charging system reserves or debits the expense of the service from the paying party account. Because the paying party identifier is determined when the service requesting party uses the service, or is determined according to the third party charging condition set in the CTF, no user group list is needed in the charging system. Moreover, the paying party account may be an account of a non-VPN user, thus the third party charging is flexible.

According to an embodiment of the present invention, the user sends the third party charging information including the paying party identifier when accessing the service, thus the user can choose a paying party account freely.

### Brief Description of the Drawings

Figure 1 is a schematic diagram illustrating a structure of a third party charging system in accordance with an embodiment of the present invention.
Figure 2 is a schematic diagram illustrating a process of generating and sending third party charging information in accordance with an embodiment of the present invention.
Figure 3 is a signalling chart illustrating an online charging process in accordance with an embodiment of the present invention.
Figure 4 is a signalling chart illustrating an offline charging process in accordance with an embodiment of the present invention.
Figure 5 is a signalling chart illustrating an online charging process in accordance with an embodiment of the present invention.
Figure 6 is a signalling chart illustrating an offline charging in accordance with an embodiment of the present invention.

### Detailed Description of the Invention

Embodiments of the present invention are hereinafter described in detail in conjunction with the drawings to further clarify the objectives, technical solutions and advantages of the present invention.

According to an embodiment of the present invention, a Charging Trigger Function (CTF) collects related information of third party charging. According to another embodiment of the present invention, the related information of third party charging may be initiated by a service requesting party, be configured in the CTF itself or be obtained through interaction with the external system, e.g. a call centre or an operating support system. The related information of third party charging includes a paying party identifier, and may further includes a verifying code correspoding to the paying party identifier, ect. After the service requesting party accesses the service and the CTF determines that the accessed service will be debited from the third party account, the CTF sends, to the charging system, the third party charging information determined based on the related information of third party charging. The charging system reserves or debits the expense of the use of the service according to the third party charging information. The paying party identifier is configured to identify a paying party account.

The paying party may preset paying party information including its own account verifying code and a payment limit in the charging system. Specifically, the paying party may preset the paying party information in the call centre or the operating support system; and then the call centre or the operating support system sends the paying party information to the charging system directly or through the CTF.

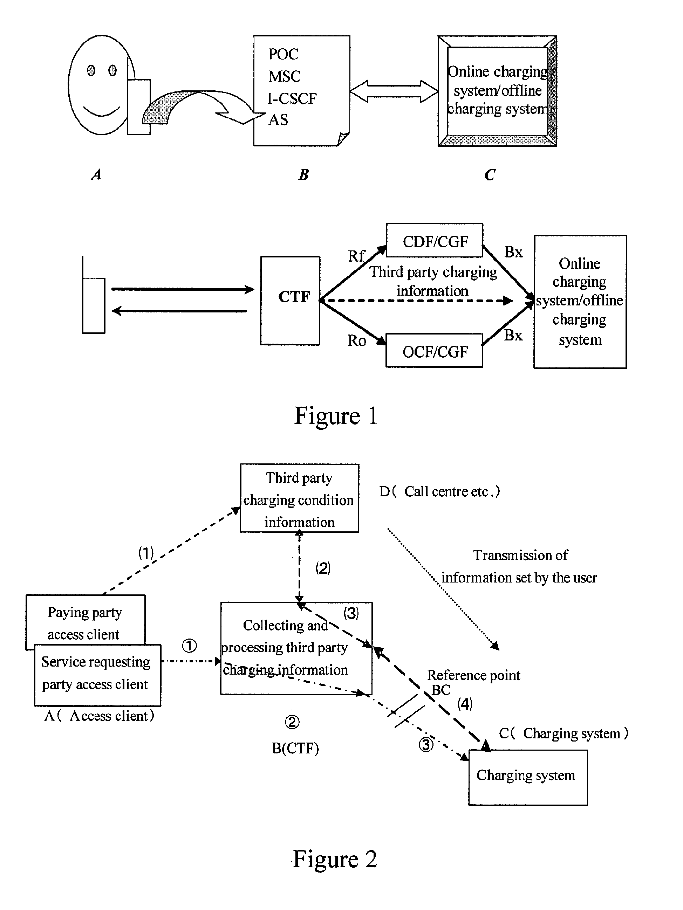

Figure 1 is a schematic diagram illustrating a structure of a third party charging system in accordance with an embodiment of the present invention. In Figure 1, A is a main body including the subject of actions and the entity accessing a network, such as a mobile telephone, a fixed telephone, etc. B is a service implimentation entity, which corresponds to the CTF in the charging network. Specifically, B may be a Switch, a Mobile Switching Centre (MSC), a Push-to-Talk Over Celluar (POC) server, an Application Server (AS), a Gateway GPRS Support Node (GGSN), or a Serving GPRS Support Node (SGSN). C is the charging system, which may be an online charging system or an offline charging system. B and C may connect with each other through Charging Data Function/Charging Data Record Gateway Function (CDF/CGF) or Online Charging Funtion/Charging Data Record Gateway Function (OCF/CGF). Particularly, the CTF may connect to the offline charging system through the CDF/CGF or may connect to the online charging system through the OCF/CGF. The interface between the CTF and the CDF/CFG may be implemented by 3GPP Rf reference point. The interface between the CTF and the OCF/CGF may be implemented by 3GPP Ro reference point. The interface between the CDF/CGF and the offline charging system may be implemented by Bx reference point, and the interface between the OCF/CGF and the online charging system may be implemented by Bx reference point. The interface between the CTF and the charging system may be implemented by OMA CH-1, CH-2 interface, CAMEL interface, or the like, and these interfaces are bridges between the CTF and the CDF/CGF or between the CTF and the OCF/CGF.

According to an embodiment of the present invention, a client may trigger third party charging. In other words, when the client accesses the service, the client may send to the CTF a service request message including related information of third party charging. The related information of third party charging may include a third party charging sepcial access identifier and a paying party identifier, or further include a verifying code corresponding to the paying party identifier and so on. In addition, the client may support an interface for the user to input the paying party identifier and the verifying code if there is an interface input manner for delivering the data service. The paying party identifier mentioned here may be the SIP URI of the paying party, the Mobile Station ISDN number(MSISDN) of the paying party, the account of the paying party, or the like.

The CTF mentioned above is configured to collect, send and integrate the related information of third party charging from the service requesting party or the call centre, and send to the charging system the third party charging information complying with the standardized profile for the interface between the CTF and the charging system to enable the reservation or debiting of the charging system. The third party charging information may include the paying party identifier, the user account identifier, or the paying party verifying code, etc.

The charging system correlates the third party charging information of the CTF with the paying party account, and carries out the reservation or debiting from the third party account. Or the charging system correlates the third party charging information including the verifying code of the paying party account with the paying party information to validate the third party charging information, and carries out the reservation or debiting from the third party account according to a validation result.

Figure 2 is a schematic diagram illustrating a process of generating and delivering third party charging information in accordance with an embodiment of the present invention. As shown in Figure 2, an interface between B (CTF) and C (charging system) may be implemenyed by a Camel, a 3GPP Ro reference point, a 3GPP Rf reference point, an OMA CH-1, an OMA CH-2, or the like. As can be seen from Figure 2, there are two approaches for generating and delivering the third party charging information.

In one approach, as shown in ① ② ③ in Figure 2, a client, when accessing the service, inputs the third party charging information including a third party charging access identifier and a paying party identifier, or further including a verifying code, and sends the third party charging information to the CTF. The CTF collects and sends, according to the third party charging information, third party charging parameters to the charging system. And the charging system processes the request based on the third party charging parameters.

In another approach, as shown in (1) (2) (3) (4) in Figure 2, the paying party sets, in the call centre directly or through an access client, third party charging condition for the service requesting party using the service. For instance, the third party charging condition will be set as information on whether the service accessed by the requesting party will be charged by the third party, and/or corresponding paying party identifier(s). For another instance, the third party charging condition will be set as valid period(s) of third party charging, and/or service type and corresponding paying party identifier. Then the call centre sends the third party charging condition to the CTF, the CTF determines whether the service will be charged by the third party according to the third party charging condition when the client accesses the service, generates the third party charging information based on the third party charging condition, and sends the third party charging information to the charging system.

Alternatively, the third party charging condition ma y be set in the CTF by the service requesting party through the media system, such as the call centre or the operating support system. Thus the service requesting party may choose the paying party account freely.

A method for third party charging is illustrated in detail in an embodiment of the present invetnion.

According to this embodiment, the paying party presets a verifying code for its own account in the charging system through a call centre or an operating support system, or further presets a payment limit. Embodiments are illustrated in detail with respect to the process of online charging and the process of offline charging respectively.

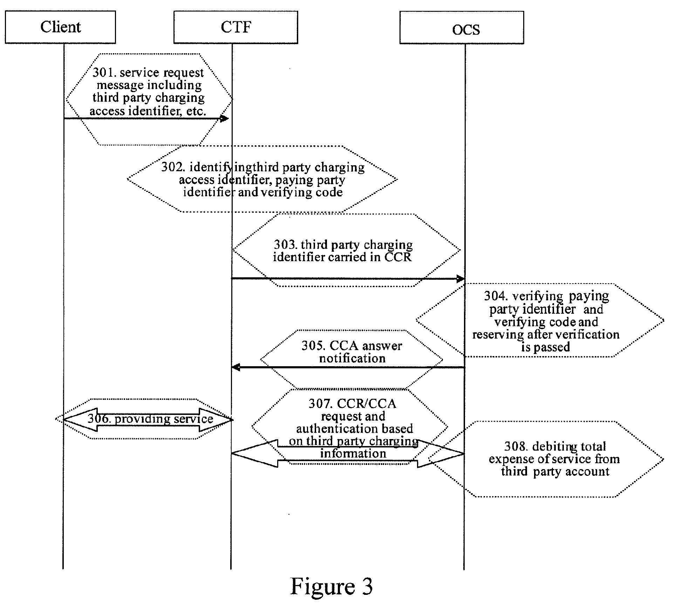

Figure 3 is a signalling chart illustrating an online charging process in accordance with an embodiment of the present invention. As shown in Figure 3, the online charging process of an embodiment includes:
Block 301: when accessing a service, a user sends, through an access client (e.g. a phone), a service request message including related information of third party charging such as a third party charging access identifier, a paying party identifier, a verifying code, and so on to a CTF in order to trigger the third party charging service.

The paying party identifier may be a client identifier of the paying party, for example, Mobile Station ISDN number(MSISDN), Session Initiation Protocol Uniform Resources Identifier (SIP URI), or the like. For instance, in a calling service, the user dials additionally the third party charging access identifier, the paying party identifier, and the verifying code. For example, the number dialled by the user is '179998613800000000*12345#07552000000', '17999' is the third party charging access identifier; '8613800000000' is the paying party identifier, which is the user identifier corresponding to the paying party account in this example; '12345' is the verifying code; '*' is a separator for separating the paying party identifier and the verifying code; and '#' is a separator for separating the verifying code and the called number.

In some data services, if there is an interface input manner, the user can input the paying party identifier, the verifing code and otherwith by setting the display interface.

Block 302: in response to receiving the service request message sent by the user through the access client, the CTF detects that the requested service will be charged to the third party account according to the third party charging access identifier in the related information of third party charging, and obtains the paying party identifier and the verifying code from the related information of third party charging.

Block 303: the CTF sends third party charging information including the paying party identifier, the verifying code and the third party charging identifier indicating that the requested service will be charged to the third party account to an Online Charging System (OCS) where the paying party account is located through a Credit Control Request (CCR).

Block 304: in response to receiving the CCR, the OCS verifies the CCR, and futher verifies the paying party identifier and the verifying code in the CCR according to the verifying code set for the paying party account in the OCS. The OCS further determines whether a reservation amount exceeds the payment limit preset by the paying party in the paying party account. When the CCR passes the verification and the reservation amount does not exceed the payment limit, Block 305 is performed.

In the Block 304 above, if the CCR does not pass the verification, the OCS may return a verification failure message to the CTF. And the CTF forwards the verification failure message to the client, and the process is terminated. Similarly, if the reservation amount exceeds the payment limit, the OCS may return a payment limit shortage message to the CTF, the CTF forwards the payment limit shortage message to the client, and the process is terminated.

Block 305: the OCS carries out the reservation from the paying party account, and returns a reservation answer notification to the CTF via a Credit Control Answer (CCA).

Block 306: the CTF provides the service to the client.

Block 307: after the reservation amount is used up, the CTF interacts with the OCS for the reservation, i.e., Block 303 to Block 306 are performed.

In this embodiment, Block 303 to Block 306 are performed once the reservation amount is used up.

Block 308: the OCS debits the total expense of the use of the service from the paying party account after the service is terminated.

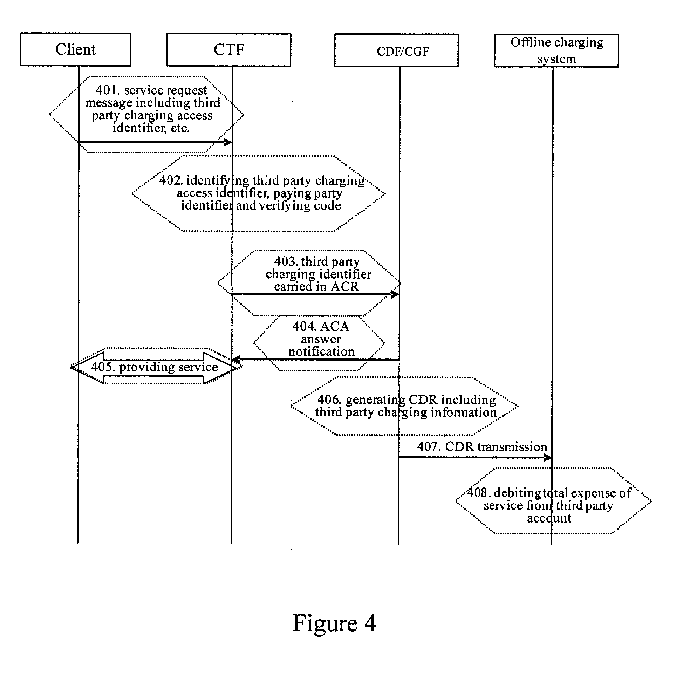

A process of offline charging in another embodiment is shown in Figure 4, which includes the following processes.

Block 401: a user Client sends a service request message including related information of third party charging such as a third party charging access identifier, a paying party identifier, a verifying code, etc. to a CTF in order to trigger a third party charging service.

Block 402: in response to receiving the service request message sent by the Client, the CTF detects that the requested service will be charged to the third party account according to the third party charging access identifier in the related information of third party charging, and then obtains the paying party identifier and the verifying code from the related information of third party charging.

Block 403: the CTF sends a third party charging information including the paying party identifier, the verifying code and the third party charging identifier to a Calling Data Function (CDF) and a Charging Data Record (CDR) Gateway Function (CDF/CGF) via an Accounting Request (ACR). The third party charging identifier indicates that the requested service will be charged to the third party account.

Block 404: the CDF/CGF returns an answer notification to the CTF via an Accounting Answer (ACA).

Block 405: the CTF provides the service to the client for the user.

Block 406: the CDF/CGF generates a CDR including the third party charging information including the paying party identifier, the verifying code, etc.

Block 407: the CDF/CGF dilivers the CDR to an offline charging system.

Block 408: the offline charging system verifies the paying party identifier and the verifying code in the third party charging information, and debits the total expense of the use of the service from the account corresponding to the paying party identifier according to the CDR.

If the paying party identifier and the verifying code are verified as failure, the charging system returns a verification failure message to the CDF/CGF. After the service is terminated, the CDF/CGF may interact with the charging system where the account of the user is located to debit the expense of the service from the account of the user. The CDF/CGF may also notify the CTF that the paying party identifier and the verifying code are verified as failure, the CTF then interacts with the charging system where the account of the user is located to debit the expense of the service from the account of the user.

Additionally, a payment limit may be preset for the paying party account in the offline charging system according to this embodiment. If the expense of the use of the service exceeds the payment limit, the offline charging system returns a charging reject message to the CDF/CGF or to the CTF via the CDF/CGF. The CDF/CGF or the CTF debits the expense of the use of the service from the account of the user.

In another embodiment of the present invention, when a service requesting party accesses the servcie, the information sent to the CTF does not include the related information of third party charging such as the third party charging access identifier, the paying party identifier, the verifying code, etc. Instead, the paying party presets third party charging condition in the CTF. For example, the paying party presets the information on whether the service requesting party will be charged by the third party and corresponding paying party identifier, or further presets the valid period of the third party charging and/or service type for the third party charging, and the corresponding paying party identifier.

Embodiments are described in detail with reference to online charging and offline charging respectively.

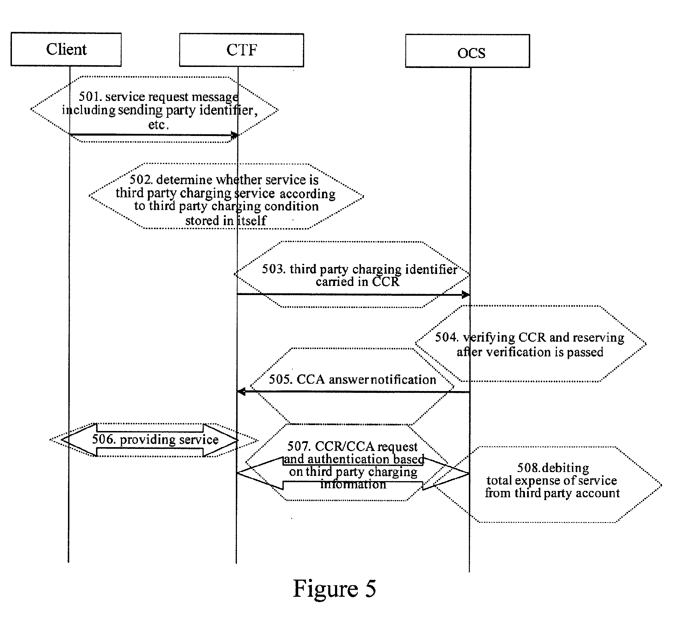

The process of online charging in an embodiment is shown in Figure 5, which includes the following processes.

Block 501: when accessing a service, a user client sends a service request message including a sending party identifier to the CTF. The sending party identifier is the user identifier.

Block 502: in response to receiving the service request message, the CTF determines whether the use of the service will be charged to the third party account according to the user identifier and the third party charging condition preset in the CTF. In other words, the CTF determines whether the service is a third party charging service. If the service is a third party charging service, the CTF determines the paying party identifier, and Block 503 is performed. If the service is not a third party charging service, the CTF performs a regular process.

If the third party charging condition preset in the CTF is the information on whether the requested service will be charged to the third party account, the CTF determines whether to perform the third party charging according to the user identifier in the service request message, and determines the paying party identifier accorrding to the third party charging condition.

If the third party charging condition preset in the CTF includes the valid period of third party charging and/or the service type, the CTF determines whether to perform the third party charging and determines the corresponding paying party identifier according to the sending party identifier and the current time. In another embodiment of the present invention, the CTF determines whether to perform the third party charging and determines the corresponding paying party identifier according to the sending party identifier and the service type. Additionally, in order to determine whether to perform the third party charging and determine the paying party identifier according to the service type, the service request messa ge should include the service type. And the CTF determines whether to perform the third party charging and determines the paying party identifier according to the service type included in the charging request message.

Block 503: the CTF sends the third party charging information including the paying party identifier and the third party charging identifier to the OCS where the paying party account is located via a CCR. The third party charging identifier indicates that the charging request is the third party charging.

Block 504: in response to receiving the CCR, the OCS verifies the CCR and determines whether the reservation amount exceeds the payment limit preset for the paying party account. When the CCR passes the verification and the reservation amount does not exceed the payment limit, Block 505 is performed.

In Block 504 above, if the reservation amount exceeds the payment limit, the OCS may return to the CTF a payment limit shortage message, and the CTF returns the payment limit shortage message to the client, and the process is terminated.

Block 505: the OCS carries out the reservation from the paying party account, and returns a reservation answer notification to the CTF through a CCA.

Block 506: the CTF provides the service for the client.

Block 507: after the reservation amount is used up, the CTF interacts with the OCS for the reservation, i.e., Block 503 to Block 506 are performed.

When the service is going on, Block 503 to Block 506 are performed once the reservation amount is used up.

Block 508: the OCS debits the total expense of the service from the paying party account after the service is terminated.

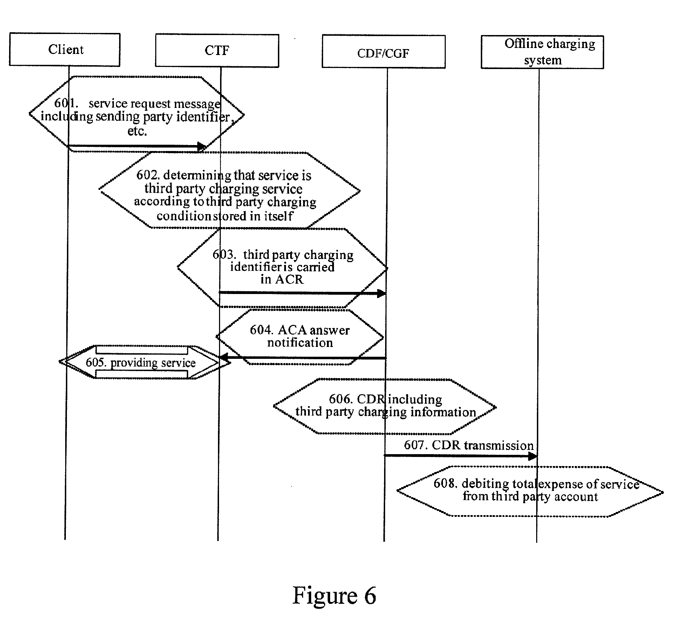

The process of offline charging in accordance with another embodiment of the present invention is shown in Figure 6, in which Blocks 601 and 602 are respectively similar to Blocks 501 and 502. In Block 603, the CTF sends to the CDF/CGF the third party charging information including the paying party identifier and the third party charging identifier via an ACR, the third party charging identifier indicates that the charging request is the third party charging. Blocks 604 and 605 are respectively similar to Blocks 404 and 405. In Block 606, the CDF/CGF generates the third party charging information including the paying party identifier. In Block 607, the CDF/CGF sends the CDR to the offline charging system. In Block 608, the offline charging system correlates the paying party account according to the CDR received, and debits the expense of the service from the paying party account.

According to an embodiment of the present invention, the verifying code corresponding to the paying party identifier is set in the charging system, and the paying party identifier and the verifying code are set in the service request message by the service requesting party. As a result, when the CTF interacts with the charging system, the expense of the service will not be debited from the paying party account until the account information and the verifying code pass the verification, thus the security of the paying party account is ensured.

According to an embodiment of the present invention, a corresponding relationship of the paying party account to the period for the third party charging and/or the service type is set in the CTF, and the paying party account is determined according to the period and/or the service type. More flexible third party charging is realized as the expense can be debited from different paying party accounts in different periods or according to different service types.

To sum up, the forgoing are only embodiments of the present invention but not for use in limiting the protection scope of the present invention. Those skilled in the art may make changes and variations on the basis of the present invention without departing from the spirit and scope thereof.

## Claims

1. A method for third party charging, comprising:
sending, by a service requesting party, a service request message including a paying party identifier to a Charging Trigger Function (CTF) when the service requesting party accesses a service;
sending, by the CTF, third party charging information including the paying party identifier from the service request message to a charging system in response to determining that the service is charged from a third party account; and
charging, by the charging system, for the service from a paying party account corresponding to the paying party identifier according to the third party charging information.

2. The method of claim 1, wherein the charging for the service from the paying party account comprises:
reserving an expense of the service from the paying party account when the third party charging information is received by the charging system; and
debiting the expense from the paying party account when the service is terminated.

3. The method of claim 1, wherein the charging for the service from the paying party account comprises:
debiting an expense of the service from the paying party account when the service is terminated.

4. The method of claim 1, 2 or 3, wherein the service request message sent to the CTF further includes a third party charging access identifier; and
the CTF determines that the service should be charged from the third party account according to the third party charging access identifier.

5. The method of claim 1, further comprising:
setting, by the paying party, at least one of a payment limit and a verifying code corresponding to the paying party account in the charging system via a call centre or an operating support system; and
sharing the at least one of the payment limit and the verifying code with the service requesting party.

6. The method of claim 5, furhter comprising:
when the verifying code is set in the charging system by the paying party, sending, by the CTF, a verifying code included in the third party charging information from the service request message to the charging system; wherein
the charging system charges for the service from the paying party account in response to determining that the verifying code sent by the CTF is valid.

7. The method of claim 5, wherein the charging system charges for the service from the paying party account in response to determining that a payment limit requested by the service requesting party is allowed when the payment limit is set in the charging system by the paying party.

8. The method of any of claims 1 to 7, wherein the paying party identifier is a client identifier of the paying party, a Session Initiation Protocol Uniform Resources Identifier (SIP URI), or an identifier of the paying party account.

9. The method of claim 1, futher comprising:
obtaining, by the CTF, a verifying code set by the paying party, when the paying party sets a verifying code; and
sending a third party charging identifier to the charging system to charge for the service from the paying party account after the paying party identifier and the verifying code from the service requesting party are verified.

10. The method of claim 1, wherein the CTF sends the third party charging information to the charging system through a charging interface protocol.

11. A method for third party charging, comprising:
collecting, by a Charging Trigger Function (CTF), a paying party identifier from a third party charging condition in response to determining that a service requested by a service requesting party should be charged from a third party account according to the third party charging condition after the service requesting party accesses the service;
sending the paying party identifier to a charging system; and
charging, by the charging system, for the service from a paying party account according to the paying party identifier sent by the CTF.

12. The method of claim 11, wherein the charging for the service from the paying party account comprises:
reserving an expense of the service from the paying party account when the paying party identifier is received by the charging system; and
debiting the expense from the paying party account when the service is terminated.

13. The method of claim 11, wherein the charging for the service from the paying party account comprises:
debiting an expense of the service from the paying party account when the service is terminated.

14. The method of claim 11, futher comprising: sending, by the CTF, a verifying code to the charging system.

15. The method of claim 11 and 14, wherein the charging system charges for the service when at least one of the paying party identifier and the verifying code is valid.

16. The method of claim 11, wherein the third party charging condition is set in the CTF; or
the third party charging condition is obtained by the CTF through interacting with a call centre or an operating support system.

17. The method of claim 11, 12 or 13, further comprising:
setting, by the paying party, a payment limit corresponding to the paying party account directly in the charging system, or through a call centre or an operating support system before the service is used; wherein
the charging system charges for the service from the paying party account in response to determining that the payment limit corresponding to the paying party account is allowed.

18. The method of claim 11, wherein the third party charging condition further comprises at least one of a valid period of third party charging and a service type; and
the CTF determines whether the service should be charged from the third party account according to the at least one of the valid period and the service type, and obtains the paying party identifier according to at least one of current time and a service type of the service.

19. The method of any of claims 11 to 18, wherein the paying party identifier is a client identifier of the paying party, a Session Initiation Protocol Uniform Resources Identifier (SIP URI) or an identifier of the paying party account.

20. The method of claim 11, wherein the CTF sends the paying party identifier to the charging system through a charging interface protocol.

21. A system for third party charging, comprising:
a client, for accessing a service to the CTF;
a Charging Trigger Function (CTF), for collecting third party charging information including a paying party identifier, sending the third party charging information; and
a charging system, for charging for the service from a paying party account according to the third party charging information sent by the CTF.

22. The system of claim 21, wherein the client is further configured for sending at least one of the paying party identifier and a verifying code to the CTF; and
the CTF is further configured for collecting the third party charging information including the paying party identifier and/or the verifying code sent by the client, and sending the third party charging information to the charging system.

23. The system of claim 21, further comprising:
a media system, for the paying party to set at least one of a payment limit and a verifying code corresponding to the paying party identifier, and sending the at least one of the payment limit and the verifying code corresponding to the paying party identifier to the charging system to be stored.

24. The system of claim 23, wherein the media system is an operating support system or a call centre.

25. The system of any of claims 21 to 24, wherein the charging system is one of an offline charging system and an online charging system.

26. The system of any of claims 21 to 25, wherein the CTF is a switch, a Mobile Switching Centre (MSC), a Push-to-Talk Over Celluar (POC) server, an Application Server (AS), a Gateway GPRS Support Node (GGSN), or a Serving GPRS Support Node (SGSN).

27. The system of claim 21, wherein the CTF is further configured for
obtaining a verifying code set by a paying party,
verifying the paying party identifier and the verifying code from the client, and
sending the third party charging identifier to the charging system if the verification is passed.

28. A Charging Trigger Function (CTF), comprising one or more components for
collecting a paying party identifier in response to determining that a service requested by a service requesting party should be charged from a third party account, and
sending the paying party identifier.

29. The CTF of claim 28, wherein the CTF comprises:
a component for determining that the service should be charged from the the third party account according to a third party charging access identifier received from the service requesting party;
a component for collecting the paying party identifier received from the service requesting party; and
a component for sending the paying party identifier.

30. The CTF of claim 28, wherein the CTF comprises:
a component for determining that the service should be charged from the third party account according to a third party charging conditon,
a component for collecting the paying party identifier in the third party charging conditon, and
a component for sending the paying party identifier.
